# EUROPÄISCHE PATENTSCHRIFT

(11) **EP 2 708 347 B1**
(45) Veröffentlichungstag und Bekanntmachung des Hinweises auf die Patenterteilung: **12.11.2014**
(21) Anmeldenummer: 12006526.3
(22) Anmeldetag: 17.09.2012
(51) Int. Cl.: B29C 49/64, B29C 49/42

(54) **Vorrichtung und Verfahren zur Erwärmung von Hohlkörpern**
Device and method for heating hollow bodies
Dispositif et procédé destinés au chauffage de corps creux

(43) Veröffentlichungstag der Anmeldung: 19.03.2014
(73) Patentinhaber: Value & Intellectual Properties Management GmbH, 83052 Bruckmühl (DE)
(72) Erfinder: EIBL,JOSEF, 83109 Großkarolienenfeld (DE); WIRTH,ROLF, 83052 Bruckmühl (DE); BäR, DR.KAI K.O., 83043 Bad Aibling (DE); GEITNER, DR. ANDREAS, 83700 Rottach-Egern (DE)
(74) Vertreter: Ricker, Mathias

(56) Entgegenhaltungen:
- DE-A1-102009 015 519
- DE-A1-102009 057 021
- US-A- 4 268 975

## Beschreibung

Die vorliegende Erfindung betrifft ein sauberes und energieeffizientes Verfahren zur Erwärmung eines Körpers aus Kunststoff, vorzugsweise aus Polyethylenterephthalat (PET), aus welchem ein Hohlkörper hergestellt werden kann, ein Verfahren zur Herstellung eines Hohlkörpers aus dem Körper aus Kunststoff, vorzugsweise eine Flasche, insbesondere durch Streckblasen, eine Vorrichtung zum Erwärmen des Körpers aus Kunststoff sowie einen Apparat zur Herstellung eines Hohlkörpers aus Kunststoff, vorzugsweise eine Flasche, wobei die Vorrichtung zum Erwärmen des Körpers aus Kunststoff im Apparat verwendet wird.

Die Herstellung von Hohlkörpern, beispielsweise von Flaschen aus Polyethylenterephthalat (PET), vorzugsweise Getränkeflaschen, erfolgt im Allgemeinen in einem mehrstufigen Verfahren. Zunächst werden durch Spritzgießen aus einer Kunststoffmasse, beispielsweise aus einer PET-Masse, Vorformlinge, die sogenannten Preforms, hergestellt. In weiteren Arbeitsgängen werden diese Vorformlinge in einer relativ kurzen Zeitspanne auf eine Verstrecktemperatur von etwa 110 °C erwärmt und schließlich im erwärmten Zustand einer Streckblasform zugeführt. In der Streckblasform wird unter Zuführung von Druckluft ins Innere des Vorformlings die Flasche ausgeformt, wobei der Vorformling in Richtung seiner Längsachse und seiner Querachse gestreckt wird.

Die üblicherweise verwendeten Erwärmungsvorrichtungen zur Erwärmung der Vorformlinge sind zumeist so ausgestaltet, dass der Vorformling einen Erwärmungsraum oder eine Erwärmungsstrecke durchläuft, welcher oder welche einen oder mehrere Heizstrahler aufweist. Diese Heizstrahler erwärmen den Vorformling auf die gewünschte Temperatur. Zur Erwärmung können Heizstrahler verwendet werden, die Strahlung im InfrarotBereich (IR) oder im nahen Infrarot (NIR) emittieren. In den Druckschriften US-A 4268975 und DE 10 2009 057 021 sind solche Verfahren und Vorrichtungen beschrieben.

Typischerweise durchläuft der Vorformling den Erwärmungsraum oder die Erwärmungsstrecke hängend an einer Haltevorrichtung. Auf Grund der hohen Taktgeschwindigkeiten bei der Herstellung von Flaschen aus Vorformlingen und den damit einhergehenden Erschütterungen kann es allerdings vorkommen, dass sich ein Vorformling aus der Haltevorrichtung löst. Weist der Erwärmungsraum oder die Erwärmungsstrecke einen Boden auf, so kommt der von der Haltevorrichung abgelöste Vorformling auf dem Boden des Erwärmungsraum oder der Erwärmungsstrecke zu liegen. Dort kann er einer unkontrollierten Erwärmung ausgesetzt sein, was zur Erweichung und Festkleben des Vorformlings auf dem Boden des Erwärmungsraum oder der Erwärmungsstrecke oder gar zur teilweisen thermischen Zersetzung des Vorformlings kommen kann, auch unter Brandentwicklung des Vorformlings. Ein derartiger Vorformling muss zur Vermeidung von Schäden aus der Anlage entfernt werden. Eine Unterbrechung des Herstellungsprozesses verbunden mit Reinigungsarbeiten des verschmutzten Erwärmungsraums oder der Erwärmungsstrecke führen jedoch zu nachteiligen Maschinenstillstandzeiten.

In einer weiteren technisch eingesetzten Ausführungsform eines Erwärmungsraums oder einer Erwärmungsstrecke weist dieser oder diese keinen Boden auf. Vorformlinge, welche sich aus der Haltevorrichtung lösen, werden deshalb durch die Schwerkraft unmittelbar aus dem Erwärmungsraum oder der Erwärmungsstrecke entfernt, ohne diese in obiger Weise nachteilig beeinträchtigen zu können. Allerdings weist dieser Typ eines Erwärmungsraums oder einer Erwärmungsstrecke den Nachteil auf, dass über den nach unten offenen Erwärmungsraum oder die Erwärmungsstrecke Energie abgestrahlt wird, die für die Erwärmung der Vorformlinge verloren geht. Damit sind eine solche Vorrichtung und das Verfahren, welches mit ihr ausgeübt wird, bezüglich der Energieeffizienz verbesserungswürdig.

Eine Aufgabe der vorliegenden Erfindung ist, ein Verfahren und eine Vorrichtung zur Durchführung des Verfahrens zur Verfügung zu stellen, welches die geschilderten Besonderheiten der aus dem Stand der Technik bekannten Verfahren und Vorrichtungen vermeidet.

Diese Aufgabe wird gelöst mit einem Verfahren und einer Vorrichtung zur Erwärmung eines Körpers aus Kunststoff, vorzugsweise PET, wobei der Körper vorzugsweise in Form eines Vorformlings vorliegt, aus dem ein Hohlkörper hergestellt werden kann, vorzugsweise eine Flasche, welches dadurch gekennzeichnet ist, dass der Körper aus Kunststoff so durch den Erwärmungsraum oder die Erwärmungsstrecke geführt wird, dass der Boden des Erwärmungsraums oder der Erwärmungsstrecke sich öffnet, sobald ein sich von der Haltevorrichtung gelöster Körper aus Kunststoff auf dem Boden zu liegen kommt. Dadurch wird er aus dem Erwärmungsraum oder der Erwärmungsstrecke entfernt. Nach der Entfernung wird der Boden wieder geschlossen. Erfindungsgemäß können somit Verschmutzungen und Reinigungsarbeiten vermieden werden, wobei Energieverluste minimiert werden und somit die Energieeffizienz erhalten bleibt.

Gemäß eines ***ersten Aspekt*** betrifft die Erfindung ein Verfahren zur Erwärmung eines Körpers aus Kunststoff, vorzugsweise PET, wobei der Körper vorzugsweise in Form eines Vorformlings vorliegt, aus dem ein Hohlkörper hergestellt wird, vorzugsweise eine Flasche, mindestens aufweisend Stufen (i) bis (iii) oder Stufen (i) bis (iv):
(i) Einbringen mindestens eines Körpers aus Kunststoff in einen Erwärmungsraum, wobei der Erwärmungsraum einen Boden aufweist, derart, dass der Körper aus Kunststoff vom Boden des Erwärmungsraumes beabstandet ist;
(ii) Erwärmen des in Stufe (i) in den Erwärmungsraum eingebrachten Körpers aus Kunststoff;
   dadurch gekennzeichnet, dass
   sich nach Stufe (ii) die Stufe (iii) anschließt; oder dass sich nach Stufe (ii) die Stufe (iii) und sich nach Stufe (iii) die Stufe (iv) anschließt:
(iii) Detektieren, ob sich der Körper aus Kunststoff während des Erwärmens auf dem Boden des Erwärmungsraumes befindet oder nicht;
(iv) Öffnen des Bodens des Erwärmungsraumes falls in Stufe (iii) detektiert wurde, dass sich der Körper aus Kunststoff auf dem Boden befindet.

Der Begriff *"Verfahren zum Erwärmen eines Körpers aus Kunststoff"* wie in dieser Offenbarung verwendet, bedeutet ein Verfahren, bei dem ein Körper aus Kunststoff mit Hilfe von Infrarotstrahlung (IR-Strahlung) oder Infrarot-Strahlung im nahem Infrarot (NIR) erfindungsgemäß erwärmt wird. Der Kunststoff liegt vorzugsweise in Form eines Vorformling vor, aus dem durch Erwärmen und Streckblasen ein Hohlkörper hergestellt werden kann.

Der begriff *"Körper"* wie in dieser Offenbarung verwendet, bedeutet ein Objekt, welches Raum einnimmt und eine Masse besitzt.

Der Begriff *"Kunststoff"* wie in dieser Offenbarung verwendet, umfasst jegliches thermoplastische organische Polymer, welches sich beim Erwärmen durch mechanische Einwirkung verformen lässt.

Polymere, welche sich mit der erfindungsgemäßen Vorrichtung erwärmen lassen oder sich erwärmen und dann in Hohlkörper überführen lassen sind vorzugsweise Polycarbonate, Polyolefine, Polyvinylchlorid oder Polyester.

Polyester sind vorzugsweise aromatische Polyester, also Polyester, welche durch Veresterung von aromatischen mehrwertigen Carbonsäuren mit mehrwertigen Alkoholen hergestellt werden können. Vorzugsweise sind die aromatischen Carbonsäuren ausgewählt aus Terephthalsäure, 1,4-Naphthalindicarbonsäure und/oder Isophthalsäure. Die Alkoholkomponente ist vorzugsweise ausgewählt aus Ethylenglykol oder Butylenglykol. Ein bevorzugter Polyester ist das bekannte Polyethylenterephthalat (PET).

Vorzugsweise wird die erfindungsgemäße Vorrichtung zur Erwärmung von Polyestern verwendet, vorzugsweise von PET oder von Kunststoffen, welche PET enthalten.

Der Begriff *"Vorformling"* wie in dieser Offenbarung verwendet, bedeutet einen Körper, welcher Kunststoff aufweist oder welcher aus Kunststoff besteht, aus welchem durch Verformen ein Hohlkörper gebildet wird. Synonym wird auch der Begriff *"Preform"* in dieser Offenbarung verwendet.

Vorzugsweise ist der Körper so ausgestaltet, dass er eine Längsachse aufweist. Vorzugsweise findet sich diese Längsachse im Hohlkörper nach der Verformung des Vorformlings wieder. Sie erstreckt sich dann i.A. durch den im Hohlkörper enthaltenen Hohlraum.

Der Begriff *"Hohlkörper"* wie in dieser Offenbarung verwendet, umfasst jeglichen Körper, welcher eine Hohlraum aufweist. Synonym wird auch der Begriff *"Behälter"* verwendet. Vorzugsweise sind die Hohlkörper oder Behälter flaschenförmig ausgestaltet. Mit dem erfindungsgemäßen Verfahren und der erfindungsgemäßen Vorrichtung sind jedoch auch Hohlkörper herstellbar, welche von der Flaschenform abweichen.

Der Begriff *"Einbringen"* in Stufe (i) wie in dieser Offenbarung verwendet, bedeutet in einer Ausführungsform, dass der Körper aus Kunststoff durch den Erwärmungsraum transportiert wird, vorzugsweise hängend. Vorzugsweise ist er dann in oder an einer geeigneten Haltevorrichtung oder Hängevorrichtung angebracht. Demzufolge kann Stufe (i) die Stufe (i.1) aufweisen:
(i.1) Transportieren eines Körpers aus Kunststoff durch einen Erwärmungsraum, wobei der Erwärmungsraum einen Boden aufweist, derart, dass der Körper aus Kunststoff vom Boden des Erwärmungsraums beabstandet ist, wobei der Vorformling an einer Haltevorrichtung hängt.

Der Begriff *"Erwärmungsraum"* wie in dieser Offenbarung verwendet, bedeutet eine in Länge, Breite und Höhe fest eingegrenzte Ausdehnung. Der Begriff wird synonym zum Begriff *"Erwärmungsstrecke"* verwendet. Erfindungsgemäß weist der Erwärmungsraum einen Boden auf. Der Erwärmungsraum kann auch Seitenteile sowie eine Abdeckung aufweisen. Vorzugsweise weist der Erwärmungsraum einen oder mehrere Heizstrahler auf, vorzugsweise Heizstrahler, welche Infrarot-Strahlung emittieren, vorzugsweise Infrarot-Strahlung im nahen Infrarot. Vorzugsweise ist / sind der Boden und/oder die Seitenteile und / oder die Abdeckung mit einem oder mehreren Reflektoren ausgestattet, welche IR-Strahlung oder NIR-Strahlung zu reflektieren vermögen.

Der Begriff *"Boden"* wie in dieser Offenbarung verwendet, bedeutet den Teil des Erwärmungsraums, mit welchem dieser nach unten abgeschlossen ist.

Der Begriff *"beabstandet"* wie in dieser Offenbarung verwendet, bedeutet, dass der Boden des Erwärmungsraums und der in den Erwärmungsraum gemäß Stufe (i) eingebrachte Körper aus Kunststoff durch einen messbaren Abstand voneinander getrennt sind, einander also nicht berühren.

Der Begriff *"Erwärmen"* gemäß Stufe (ii) wie in dieser Offenbarung verwendet, bedeutet, dass die Temperatur des Körpers erhöht wird.

Der Begriff *"Detektieren"* gemäß Stufe (iii) wie in dieser Offenbarung verwendet, bedeutet, dass durch ein geeignetes Mittel festgestellt wird, ob sich ein Körper auf dem Boden des Erwärmungsraums befindet oder nicht.

Ein geeignetes Mittel zum Detektieren ist in einer Ausführungsform vorzugsweise der Boden des Erwärmungsraumes selbst. Dieser ist in einer Ausführungsform so ausgestaltet, dass er auf das Gewicht des Körpers aus Kunststoff anspricht, falls der Körper aus Kunststoff den Boden berührt. In einer Ausführungsform ist der Boden des Erwärmungsraums so ausgestaltet, dass er den Erwärmungsraum nach unten hin verschließt, aber durch das Gewicht des Körpers der Erwärmungsraum nach unten geöffnet wird, wenn der Körper den Boden berührt bzw. auf diesem zu liegen kommt, wobei Stufe (iv) ausgelöst wird.

In einer weiteren Ausführungsform erfolgt das Detektieren gemäß Stufe (iii) mittels einer Lichtschranke. In einer Ausführungsform ist diese Lichtschranke so im Erwärmungsraum angeordnet, dass ein Körper, der in Stufe (iii) den Boden des Erwärmungsraumes berührt bzw. auf diesem zu liegen kommt, den Lichtstrahl der Lichtschranke unterbricht. Bei Unterbrechung wird das Öffnen gemäß Stufe (iv) ausgelöst. Dieses Öffnen bewirkt, dass der Körper aus Kunststoff den Erwärmungsraum verlässt, d.h. aus diesem durch Einwirken der Schwerkraft ausgeschleust wird.

In einer weiteren Ausführungsform können zur Detektion auch andere elektromagnetische Wellen wie elektromagnetische Wellen im Radiofrequenzbereich (Radar) verwendet werden. Die Verwendung von Ultraschallwellen ist gleichfalls möglich. Derartige Wellen werden vom Vorformling reflektiert, wobei die reflektierten Wellen, die mittels eines geeigneten Sensors registriert werden können, die Anwesenheit des Vorformlings auf dem Boden anzeigen. In einer Ausführungsform sind diese Wellen so ausgerichtet, dass ein Körper, der in Stufe (iii) den Boden des Erwärmungsraumes berührt bzw. auf diesem zu liegen kommt, diese Wellen reflektiert, wobei bei Reflektion das Öffnen gemäß Stufe (iv) ausgelöst wird. Dieses Öffnen bewirkt, dass der Körper aus Kunststoff den Erwärmungsraum verlässt, d.h. aus diesem durch Einwirken der Schwerkraft ausgeschleust wird.

Demzufolge ist das erfindungsgemäße Verfahren auch **dadurch gekennzeichnet, dass** das Detektieren in Stufe (ii) erfolgt über: Belastung des Bodens mit dem Gewicht des Körpers aus Kunststoff; Unterbrechung einer Lichtschranke durch den Körper aus Kunststoff; Reflektion von Wellen im Ultraschallbereich oder Reflektion von elektromagnetischen Wellen.

Das Öffnen des Erwärmungsraumes gemäß Stufe (iv) kann erfolgen durch Aufklappen des Bodens oder durch Wegschieben des Bodens des Erwärmungsraumes.

Demzufolge ist das Verfahren gemäß Stufe (iv) auch **dadurch gekennzeichnet, dass** es die Stufen (iv.1) oder (iv.2) aufweist:
(iv.1) Aufklappen des Bodens;
(iv.2) Wegschieben des Bodens.

Nach dem Öffnen und dem Ausschleusen des auf dem Boden befindlichen Körpers aus dem Erwärmungsraum wird der Boden wieder geschlossen, um eine Abstrahlung der Wärme außerhalb des Erwärmungsraumes und den damit einhergehenden Wärmeverlust zu begrenzen oder zu vermeiden.

Demzufolge weist das erfindungsgemäße Verfahren nach Stufe (iv) die Stufe (v) auf:
(v) Schließen des Bodens, nachdem der Boden gemäß Stufe (iv) geöffnet wurde.

Erfindungsgemäß werden somit Körper, welche den Boden des Erwärmungsraumes berühren bzw. auf diesem zu liegen kommen, aus dem Erwärmungsraum ausgeschleust. Körper, welche vom Boden des Erwärmungsraumes beabstandet sind, können hingegen nach der Erwärmung der Streckblasvorrichtung zugeführt werden.

Gemäß eines ***zweiten Aspekts*** betrifft die Erfindung ein Verfahren zur Herstellung eines Hohlkörpers aus einem Körper aus Kunststoff, vorzugsweise PET, wobei der Körper vorzugsweise in Form eines Vorformlings vorliegt, durch Streckblasen, mindestens aufweisend Stufen (i) bis (iii) oder Stufen (i) bis (iv), und weiter aufweisend nach Stufe (iii) die Stufe (vi):
(i) Einbringen mindestens eines Körpers aus Kunststoff in einen Erwärmungsraum, wobei der Erwärmungsraum einen Boden aufweist, derart, dass der Körper aus Kunststoff vom Boden des Erwärmungsraumes beabstandet ist;
(ii) Erwärmen des in Stufe (i) in den Erwärmungsraum eingebrachten Körpers aus Kunststoff;
(iii) Detektieren, ob sich der Körper aus Kunststoff während des Erwärmens auf dem Boden des Erwärmungsraumes befindet oder nicht;
(iv) Öffnen des Bodens des Erwärmungsraumes falls in Stufe (iii) detektiert wurde, dass sich der Körper aus Kunststoff auf dem Boden befindet;
(vi) Überführen des Körpers aus Kunststoff in eine Streckblasvorrichtung, wenn in Stufe (iii) detektiert wurde, dass sich der in Stufe (ii) erwärmte Körper aus Kunststoff nicht auf dem Boden des Erwärmungsraumes befindet.

In einer Ausführungsform betrifft die Erfindung ein Verfahren zur Herstellung eines Hohlkörpers aus einem Körper aus Kunststoff, vorzugsweise PET, wobei der Körper vorzugsweise in Form eines Vorformlings vorliegt, durch Streckblasen, mindestens aufweisend Stufen (i) bis (vi):
(i) Einbringen mindestens eines Körpers aus Kunststoff in einen Erwärmungsraum, wobei der Erwärmungsraum einen Boden aufweist, derart, dass der Körper aus Kunststoff vom Boden des Erwärmungsraumes beabstandet ist;
(ii) Erwärmen des in Stufe (i) in den Erwärmungsraum eingebrachten Körpers aus Kunststoff;
(iii) Detektieren, ob sich der Körper aus Kunststoff während des Erwärmens auf dem Boden des Erwärmungsraumes befindet oder nicht;
(iv) Öffnen des Bodens des Erwärmungsraumes falls in Stufe (iii) detektiert wurde, dass sich der Körper aus Kunststoff auf dem Boden befindet;
(v) Schließen des Bodens, nachdem der Boden gemäß Stufe (iv) geöffnet wurde;
(vi) Überführen des Körpers aus Kunststoff in eine Streckblasvorrichtung, wenn in Stufe (iii) detektiert wurde, dass sich der in Stufe (ii) erwärmte Körper aus Kunststoff nicht auf dem Boden des Erwärmungsraumes befindet.

Der Begriff *"Streckblasen"* in Stufe (vi) wie in dieser Offenbarung verwendet, bedeutet ein Verfahren zur Herstellung von Hohlkörpern aus thermoplastischen Kunststoff, bei welchem ein Hohlkörper aus einem Vorformling hergestellt wird, welcher in zwei Richtungen verformt wird, nämlich in Richtung seiner Längsachse und i.A. auch in Richtung einer Achse. Diese verläuft quer, vorzugsweise senkrecht zur Längsachse. Dies bedeutet, dass beim Streckblasen der Vorformling in Längsrichtung gestreckt wird, wobei auch sein Umfang in Richtung der Querachse zunimmt.

Gemäß eines ***dritten Aspekts*** betrifft die Erfindung eine Vorrichtung zum Erwärmen eines Körpers aus Kunststoff, vorzugsweise PET, wobei der Körper vorzugsweise in Form eines Vorformlings vorliegt, aus dem ein Hohlkörper hergestellt wird, vorzugsweise eine Flasche, mindestens aufweisend einen Erwärmungsraum mit einem Boden,
dadurch gekennzeichnet, dass
der Boden des Erwärmungsraumes so ausgestaltet ist, dass er geöffnet und wieder geschlossen werden kann.

In einer Ausführungsform betrifft die Erfindung eine Vorrichtung zum Erwärmen eines Körpers aus Kunststoff, vorzugsweise PET, wobei der Körper vorzugsweise in Form eines Vorformlings vorliegt, aus dem ein Hohlkörper hergestellt wird, vorzugsweise eine Flasche, mindestens aufweisend einen Erwärmungsraum mit einem Boden,
dadurch gekennzeichnet, dass
der Boden des Erwärmungsraumes so ausgestaltet ist, dass er geöffnet wird, wenn der Körper aus Kunststoff den Boden berührt oder auf diesem zu liegen kommt, und wieder geschlossen wird, wenn der Körper aus Kunststoff den Erwärmungsraum verlassen hat.

Der Begriff *"Vorrichtung zum Erwärmen von Kunststoff"* wie in dieser Offenbarung verwendet, bedeutet eine Vorrichtung, in der ein Kunststoff mit Hilfe von Infrarotstrahlung (IR-Strahlung) oder Infrarot-Strahlung im nahem Infrarot (NIR) erwärmt und verformt wird. Der Kunststoff liegt vorzugsweise in Form eines Vorformling vor, aus dem durch Erwärmen und Streckblasen ein Hohlkörper hergestellt werden kann.

Demzufolge ist der Erwärmungsraum auch **dadurch gekennzeichnet, dass** er einen oder mehrere Heizstrahler aufweist, welche IR- oder NIR-Strahlung emittieren.

Vorzugsweise weist die Vorrichtung weiter auf:
(a) Mittel zum Detektieren eines Körpers aus Kunststoff, wobei das Mittel detektiert, ob sich der Körper aus Kunststoff während des Erwärmens auf dem Boden des Erwärmungsraumes befindet oder nicht;
(b) Mittel zum Öffnen des Bodens, wenn das Mittel zum Detektieren (a) einen Körper aus Kunststoff auf dem Boden detektiert hat;
(c) Mittel zum Schließen des Bodens, nachdem das Mittel (b) zum Öffnen den Boden geöffnet hat.

Der Begriff *"Mittel zum Detektieren"* wie in dieser Offenbarung verwendet, bedeutet ein oder mehrere Mittel, mit dem oder mit denen es möglich ist, zu erkennen, ob der Körper aus Kunststoff den Boden des Erwärmungsraumes berührt oder ob sich der Körper aus Kunststoff auf dem Boden des Erwärmungsraumes befindet oder nicht, also auf diesem zu liegen kommt oder nicht. In einer Ausführungsform ist das Mittel zum Detektieren ausgewählt aus: Boden des Erwärmungsraumes; Lichtschranke; Ultraschall oder elektromagnetische Wellen wie Radar wie beim ***ersten Aspekt*** definiert.

Der Begriff *"Mittel zum Öffnen des Bodens"* wie in dieser Offenbarung verwendet, bedeutet ein oder mehrere Mittel, mit dem oder mit denen es möglich ist, den Erwärmungsraum so zu öffnen, dass der Vorformling den Erwärmungsraum verlassen kann, d.h. den Boden vom Erwärmungsraum so zu entfernen, dass der Vorformling den Erwärmungsraum unter der Einwirkung von Schwerkraft verlassen kann.

In einer Ausführungsform ist das Mittel zum Öffnen des Bodens ausgewählt aus Scharnier, Feder, Elektromotor.

Der Begriff *"Scharnier"* bedeutet ein Gelenk, welches den Boden, vorzugsweise eine Klappe, mit dem Erwärmungsraum beweglich verbindet.

Der Begriff *"Mittel zum Schließen des Bodens"* wie in dieser Offenbarung verwendet, bedeutet ein oder mehrere Mittel, mit dem oder mit denen es möglich ist, den Boden des Erwärmungsraumes zu schließen.

Vorzugsweise werden als Mittel zum Schließen des Bodens die Mittel zum Öffnen des Bodens eingesetzt.

In einer Ausführungsform ist das Mittel zum Öffnen ein Scharnier oder eine Feder. Vorzugsweise ist dann in einer Ausführungsform der Boden als Klappe ausgebildet.

In einer Ausführungsform ist die Klappe mit einem Gegengewicht kombiniert, welches so bemessen und an der Klappe angebracht ist, dass die Klappe den Erwärmungsraum verschließt, solange sich kein Vorformling auf der Klappe befindet, aber unter dem Gewicht des Vorformlings den Erwärmungsraum freigibt. Nachdem der Vorformling den Erwärmungsraum und auch die Klappe verlassen hat, wird die Klappe durch das Gegengewicht gegen den Erwärmungsraum gedrückt und verschließt diesen. Klappe und Gegengewicht bilden somit eine Art Wippe, wobei das Scharnier den Drehpunkt der Wippe darstellt.

In einer Ausführungsform ist das Mittel zum Öffnen ein Scharnier, wobei der Boden als Klappe ausgebildet ist, wobei die Klappe mit einem Gegengewicht kombiniert ist.

Demzufolge wird in einer bevorzugten Ausführungsform einer erfindungsgemäßen Vorrichtung das erfindungsgemäße Verfahren so durchgeführt, dass, wenn ein Vorformling auf dem Boden des Erwärmungsraumes oder der Erwärmungsstrecke zu liegen kommt, wobei der Boden als Klappe ausgebildet ist, die mit einem Gegengewicht kombiniert ist, sich die Klappe unter dem Gewicht des Vorformlings öffnet, wobei der Vorformling unter dem Einfluss der Schwerkraft den Erwärmungsraum verlässt, und nachdem der Vorformling den Erwärmungsraum und damit auch die Klappe verlassen hat, die Klappe unter dem Einfluss des Gegengewichts den Erwärmungsraum verschließt.

In einer weiteren Ausführungsform ist das Mittel zum Öffnen ein Elektromotor. Vorzugsweise ist dann in einer Ausführungsform der Boden als Schieber ausgebildet.

In einer Ausführungsform weist die erfindungsgemäße Vorrichtung eine Steuervorrichtung auf, die so ausgestaltet ist, dass sie dem Mittel (b) den Befehl zum Öffnen des Bodens erteilt sobald Mittel (a) detektiert hat, das der Körper aus Kunststoff den Boden berührt oder auf diesem liegt.

In einer weiteren Ausführungsform ist die Steuervorrichtung so ausgestaltet, dass sie dem Mittel (c) den Befehl zum Schließen des Bodens erteilt, nachdem durch Mittel (b) der Boden geöffnet wurde und der Körper aus Kunststoff den Erwärmungsraum verlassen hat.

Gemäß eines ***vierten Aspekts*** betrifft die Erfindung einen Apparat zur Herstellung eines Hohlkörpers, vorzugsweise eines Körpers aus Kunststoff, vorzugsweise PET, wobei der Körper aus Kunststoff in Form eines Vorformlings vorliegt, aus dem der Hohlkörper hergestellt wird, vorzugsweise eine Flasche, mindestens aufweisend:
(a) eine Vorrichtung wie im ***dritten Aspekt*** der Erfindung definiert;
(b) eine Vorrichtung zum Streckblasen.

Geeignete Vorrichtungen zum Streckblasen sind aus dem Stand der Technik bekannt.
Figur 1 zeigt eine Seitenansicht einer erfindungsgemäßen Vorrichtung zum Erwärmen eines Körpers aus Kunststoff, vorzugsweise PET.
Figur 2 zeigt eine Seitenansicht einer erfindungsgemäßen Vorrichtung, wobei der Boden als Klappe ausgebildet ist, die mit einem Gegengewicht kombiniert ist.

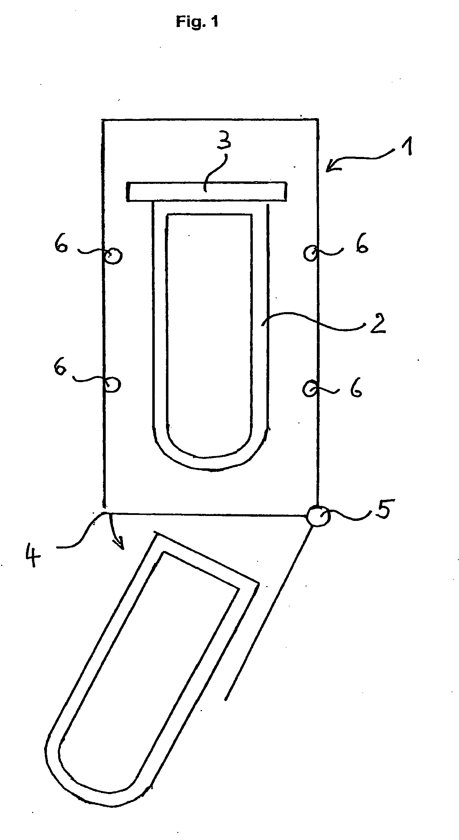

Figur 1 zeigt einen Erwärmungsraum 1, welcher einen Vorformling 2 aufweist. Der Vorformling 2 wird beispielsweise von IR-Strahlern 6 erwärmt bevor er einer Streckblasvorrichtung (nicht gezeigt) zugeführt wird. Der Vorformling ist im Erwärmungsraum 1 an einer Haltevorrichtung 3 befestigt, so dass er den Erwärmungsraum 1 hängend durchläuft. Der Erwärmungsraum 1 weist einen Boden 4 auf, der als Klappe ausgebildet ist, welcher den Erwärmungsraum 1 nach unten hin abschließt. Der Boden 4 ist über eine Feder oder ein Scharnier 5 beweglich gelagert. Löst sich der Vorformling 2 aus der Haltevorrichtung 3, so fällt er auf den Boden 4, welcher unter dem Gewicht des Vorformlings den Erwärmungsraum nach unten öffnet (durch den Pfeil angedeutet), wodurch der Vorformling 2 unter dem Gewicht der Schwerkraft den Erwärmungsraum 1 verlässt. Nach dem Verlassen wird der Erwärmungsraum 1 durch den Boden 4 über die Rückstellkraft der Feder oder des Scharniers 5 wieder verschlossen.

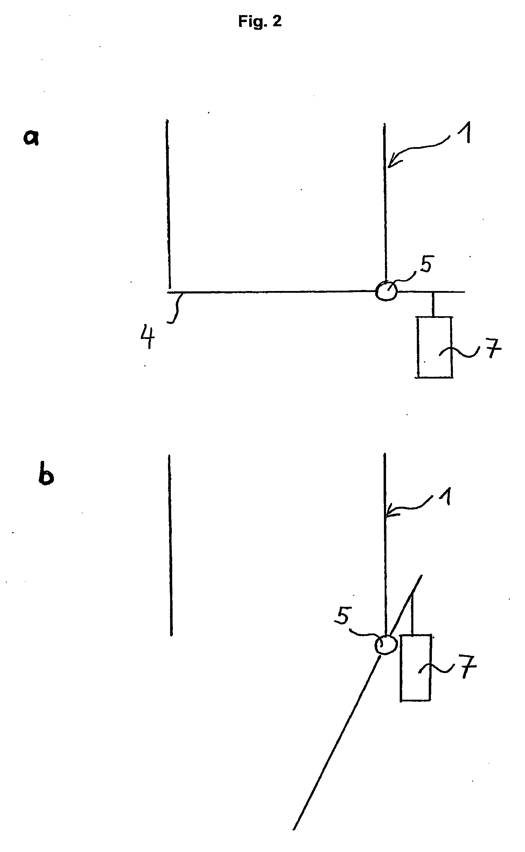

Figur 2 zeigt einen Boden 4 in Form einer Klappe, wobei die Klappe vorzugsweise über ein Scharnier 5 mit dem Erwärmungsraum 1 beweglich verbunden ist. Die Klappe ist mit einem Gegengewicht 7 verbunden. Dieses ist bemessen und an der Klappe 4 angebracht, dass die Klappe 4 den Erwärmungsraum verschließt, wenn sich kein Vorformling auf der Klappe befindet (Position a), aber unter dem Gewicht des Vorformlings 2 den Erwärmungsraum freigibt (Position b). Nachdem der Vorformling 2 den Erwärmungsraum 1 und auch die Klappe 4 verlassen hat, wird die Klappe 4 durch das Gegengewicht 7 nach oben gegen den Erwärmungsraum 2 gedrückt und verschließt diesen.

## Patentansprüche

1. Verfahren zur Erwärmung eines Körpers aus Kunststoff, vorzugsweise PET, wobei der Körper vorzugsweise in Form eines Vorformlings vorliegt, aus dem ein Hohlkörper hergestellt wird, vorzugsweise eine Flasche, mindestens aufweisend Stufen (i) bis (iii) oder Stufen (i) bis (iv):
(i) Einbringen mindestens eines Körpers aus Kunststoff in einen Erwärmungsraum, wobei der Erwärmungsraum einen Boden aufweist, derart, dass der Körper aus Kunststoff vom Boden des Erwärmungsraumes beabstandet ist;
(ii) Erwärmen des in Stufe (i) in den Erwärmungsraum eingebrachten Körpers aus Kunststoff;
**dadurch gekennzeichnet, dass**
sich nach Stufe (ii) die Stufe (iii) anschließt; oder dass sich nach Stufe (ii) die Stufe (iii) und sich nach Stufe (iii) die Stufe (iv) anschließt:
(iii) Detektieren, ob sich der Körper aus Kunststoff während des Erwärmens auf dem Boden des Erwärmungsraumes befindet oder nicht;
(iv) Öffnen des Bodens des Erwärmungsraumes falls in Stufe (iii) detektiert wurde, dass sich der Körper aus Kunststoff auf dem Boden des Erwärmungsraumes befindet.

2. Verfahren zur Herstellung eines Hohlkörpers aus einem Körper aus Kunststoff, vorzugsweise PET, wobei der Körper vorzugsweise in Form eines Vorformlings vorliegt, durch Streckblasen, mindestens aufweisend Stufen (i) bis (iii) oder Stufen (i) bis (iv) wie in Anspruch 1 definiert, und weiter aufweisend nach Stufe (iii) die Stufe (vi):
(vi) Überführen des Körpers aus Kunststoff in eine Streckblasvorrichtung, wenn in Stufe (iii) detektiert wurde, dass sich der in Stufe (ii) erwärmte Körper aus Kunststoff nicht auf dem Boden des Erwärmungsraumes befindet.

3. Verfahren nach einem der Ansprüche 1 oder 2, wobei das Detektieren in Stufe (ii) erfolgt über: Belastung des Bodens mit dem Gewicht des Körpers aus Kunststoff; Unterbrechung einer Lichtschranke durch den Körper aus Kunststoff; Reflektion von Wellen im Ultraschallbereich oder Reflektion von elektromagnetischen Wellen durch den Körper aus Kunststoff.

4. Verfahren nach einem der Ansprüche 1 bis 3, wobei Stufe (iv) die Stufe (iv.1) aufweist:
(iv.1) Aufklappen des Bodens.

5. Verfahren nach einem der Ansprüche 1 bis 3, wobei Stufe (iv) die Stufe (iv.2) aufweist:
(iv.2) Wegschieben des Bodens.

6. Verfahren nach einem der vorstehenden Ansprüche, weiter aufweisend nach Stufe (iv) die Stufe (v):
(v) Schließen des Bodens, nachdem der Boden gemäß Stufe (iv) geöffnet wurde.

7. Vorrichtung zum Erwärmen eines Körpers aus Kunststoff, vorzugsweise PET, wobei der Körper vorzugsweise in Form eines Vorformlings vorliegt, aus dem ein Hohlkörper hergestellt wird, vorzugsweise eine Flasche, mindestens aufweisend einen Erwärmungsraum mit einem Boden,
**dadurch gekennzeichnet, dass**
der Boden des Erwärmungsraumes so ausgestaltet ist, dass er geöffnet und wieder geschlossen werden kann.

8. Vorrichtung nach Anspruch 7, weiter aufweisend:
(a) Mittel zum Detektieren eines Körpers aus Kunststoff, wobei das Mittel zum Detektieren detektiert ob sich der Körper aus Kunststoff während des Erwärmens auf dem Boden des Erwärmungsraumes befindet oder nicht;
(b) Mittel zum Öffnen des Bodens, wenn das Mittel zum Detektieren (a) einen Körper aus Kunststoff auf dem Boden detektiert hat;
(c) Mittel zum Schließen des Bodens, nachdem das Mittel (b) zum Öffnen den Boden geöffnet hat.

9. Vorrichtung nach Anspruch 8, wobei das Mittel zum Detektieren ausgewählt ist aus: Boden des Erwärmungsraumes; elektromagnetische Wellen wie Licht oder Radar; Ultraschallwellen.

10. Vorrichtung nach Anspruch 8, wobei das Mittel zum Öffnen des Bodens ausgewählt ist aus Scharnier, Feder, Elektromotor.

11. Vorrichtung nach einem der Ansprüche 8 bis 10, wobei der Boden als Klappe ausgebildet ist, wobei die Klappe vorzugsweise mit einem Gegengewicht kombiniert ist, welches so bemessen und an der Klappe angebracht ist, dass die Klappe den Erwärmungsraum verschließt, solange sich kein Vorformling auf der Klappe befindet, aber unter dem Gewicht des Vorformlings den Erwärmungsraum freigibt, und wobei, nachdem der Vorformling den Erwärmungsraum und auch die Klappe verlassen hat, die Klappe durch das Gegengewicht gegen den Erwärmungsraum gedrückt wird und diesen verschließt.

12. Vorrichtung nach einem der Ansprüche 8 bis 10, wobei der Boden als Schieber ausgebildet ist.

13. Vorrichtung nach einem der Ansprüche 8 bis 12, wobei die Vorrichtung eine Steuervorrichtung aufweist, die so ausgestaltet ist, dass sie dem Mittel (b) den Befehl zum Öffnen des Bodens erteilt sobald Mittel (a) detektiert hat, das der Körper aus Kunststoff den Boden berührt oder auf diesem liegt.

14. Vorrichtung nach einem der Ansprüche 8 bis 13, wobei die Vorrichtung eine Steuervorrichtung aufweist, die so ausgestaltet ist, dass sie dem Mittel (c) den Befehl zum Schließen des Bodens erteilt, nachdem durch Mittel (b) der Boden geöffnet wurde und der Körper aus Kunststoff den Erwärmungsraum verlassen hat.

15. Apparat zur Herstellung eines Hohlkörpers, vorzugsweise eines Körpers aus Kunststoff, vorzugsweise PET, wobei der Körper aus Kunststoff in Form eines Vorformlings vorliegt, aus dem der Hohlkörper hergestellt wird, vorzugsweise eine Flasche, mindestens aufweisend:
(a) eine Vorrichtung wie in einem der Ansprüche 8 bis 14 definiert;
(b) eine Vorrichtung zum Streckblasen.

## Claims

1. Method of heating a body made from a plastic material, preferably PET, wherein said body preferably is in the form of a preform from which a hollow container is made, preferably a bottle, at least comprising steps (i) to (iii) or steps (i) to (iv):
(i) inserting at least one body made from a plastic material into a heating compartment, wherein the heating compartment comprises a bottom, such that the body made from a plastic material is spaced apart from the bottom of the heating compartment;
(ii) heating the body made from a plastic material which has been inserted into the heating compartment according to step (i);
**characterized in that**
after step (ii) the step (iii) follows; or that after step (ii) the step (iii) follows and after step (iii) the step (iv) follows:
(iii) detecting whether the body made from a plastic material is during the heating present on the bottom of the heating compartment or whether it is not present;
(iv) opening the bottom of the heating compartment if in step (iii) has been detected that the body made from a plastic material is present on the bottom of the heating compartment.

2. Method of making a hollow container from a body made from a plastic material, preferably PET, wherein the body preferably is present in the form of a preform, by means of stretch blow molding, at least comprising steps (i) to (iii) or steps (i) to (iv) as defined in claim 1, and further comprising after step (iii) the step (vi):
(vi) transferring the body made from a plastic material into a device for stretch blow molding, if in step (iii) has been detected that the body made from a plastic material, which has been heated in step (ii), is not present on the bottom of the heating compartment.

3. Method according to one of claims 1 or 2, wherein the detecting in step (ii) is performed by: loading the bottom with the weight of the body made from a plastic material; interruption of a light barrier by means of the body made from a plastic material; reflection of waves in the ultrasonic range or reflection of electromagnetic waves by means of the body made from a plastic material.

4. Method according to any one of claims 1 to 3, wherein step (iv) comprises the step (iv.1):
(iv.1) opening up the bottom.

5. Method according to any one of claims 1 to 3, wherein step (iv) comprises the step (iv.2):
(iv.2) pushing away the bottom.

6. Method according to any one of the preceding claims, further comprising after step (iv) the step (v):
(v) closing the bottom after the bottom has been opened according to step (iv).

7. Device for heating a body made from a plastic material, preferably PET, wherein the body preferably is present in the form of a preform from which a hollow container is made, preferably a bottle, at least comprising a heating compartment having a bottom,
**characterized in that**
the bottom of the heating compartment is construed such that said bottom may be opened and may be closed after it has been opened.

8. Device according to claim 7, further comprising:
(a) means for detecting a body made from a plastic material, wherein the means for detecting detects whether the body made from a plastic material is during the heating present on the bottom of the heating compartment or whether it is not present;
(b) means for opening the bottom if the means for detecting (a) has detected on the bottom a body made from a plastic material;
(c) means for closing the bottom after the means (b) for opening has opened the bottom.

9. Device according to claim 8, wherein the means for detecting is selected from: bottom of the heating compartment; electromagnetic waves such as light or radar; ultrasonic waves.

10. Device according to claim 8, wherein the means for opening the bottom is selected from hinge, spring, electric motor.

11. Device according to any one of claims 8 to 10, wherein the bottom is construed as a flap, wherein the flap preferably is combined with a counterweight, which is measured such and is attached to the flap such that the flap closes the heating compartment as long as no preform is present on the flap, however, under the weight of the preform, opens the heating compartment, and wherein, after the preform has left the heating compartment and also the flap, the flap is pressed against the heating compartment by means of the counterweight and closes said heating compartment.

12. Device according to any one of claims 8 to 10, wherein the bottom is construed as a slider.

13. Device according to any one of claims 8 to 12, wherein the device comprises a control device which is construed such that said control device issues an order to the means (b) to open the bottom as soon as means (a) has detected that the body made from a plastic material touches the bottom or is located on the bottom.

14. Device according to any one of claims 8 to 13, wherein the device comprises a control device which is construed such that said control device issues an order to the means (c) to close the bottom after the bottom has been opened by means of means (b) and the body made from a plastic material has left the heating compartment.

15. Apparatus for making a hollow container, preferably a body made from a plastic material, preferably PET, wherein the body made from a plastic material is present in the form of a preform from which a hollow container is made, preferably a bottle, at least comprising:
(a) a device as defined in any one of claims 8 to 14;
(b) a device for stretch blow molding.

## Revendications

1. Procédé destiné à l'échauffement d'un corps en matière plastique, de préférence en PET, le corps se présentant de préférence sous la forme d'une préforme à partir de laquelle est fabriqué un corps creux, de préférence une bouteille, le procédé présentant au moins des étapes (i) à (iii) ou des étapes (i) à (iv), à savoir :
(i) introduction d'au moins un corps en matière plastique dans une chambre d'échauffement, la chambre d'échauffement présentant un fond de manière à ce que le corps en matière plastique soit espacé du fond de la chambre d'échauffement ;
(ii) échauffement du corps en matière plastique ayant été introduit dans la chambre d'échauffement lors de l'étape (i) ;
**caractérisé**
**en ce qu'**à l'étape (ii) succède l'étape (iii) ; ou en ce qu'à l'étape (ii) succède l'étape (iii) et à l'étape (iii) succède l'étape (iv), à savoir :
(iii) détecter si le corps en matière plastique se trouve sur le fond de la chambre d'échauffement ou non, pendant l'échauffement ;
(iv) ouverture du fond de la chambre d'échauffement dans le cas où, au cours de l'étape (iii), il a été détecté que le corps en matière plastique se trouve sur le fond de la chambre d'échauffement.

2. Procédé de fabrication d'un corps creux à partir d'un corps en matière plastique, de préférence en PET, le corps se présentant de préférence sous la forme d'une préforme, par un processus d'étirage-soufflage, le procédé présentant au moins des étapes (i) à (iii) ou des étapes (i) à (iv), telles que définies dans la revendication 1, et présentant par ailleurs l'étape (vi) après l'étape (iii), à savoir :
(vi) transfert du corps en matière plastique dans un dispositif d'étirage-soufflage, lorsque dans l'étape (iii) il a été détecté que le corps en matière plastique échauffé au cours de l'étape (ii) ne se trouve pas sur le fond de la chambre d'échauffement.

3. Procédé selon l'une des revendications 1 ou 2, d'après lequel la détection au cours de l'étape (ii) s'effectue par : la sollicitation du fond par le poids du corps en matière plastique ; l'interruption d'une barrière photoélectrique par le corps en matière plastique ; la réflexion d'ondes dans le domaine des ultrasons ou la réflexion d'ondes électromagnétiques par le corps en matière plastique.

4. Procédé selon l'une des revendications 1 à 3, d'après lequel l'étape (iv) comprend l'étape (iv.1), à savoir :
(iv.1) ouverture du fond par basculement.

5. Procédé selon l'une des revendications 1 à 3, d'après lequel l'étape (iv) comprend l'étape (iv.2), à savoir :
(iv.2) ouverture du fond par coulissement.

6. Procédé selon l'une des revendications précédentes, présentant par ailleurs après l'étape (iv), l'étape (v), à savoir :
(v) fermeture du fond, après l'ouverture du fond conformément à l'étape (iv).

7. Dispositif destiné à l'échauffement d'un corps en matière plastique, de préférence en PET, le corps se présentant de préférence sous la forme d'une préforme à partir de laquelle est fabriqué un corps creux, de préférence une bouteille, le dispositif comprenant au moins une chambre d'échauffement avec un fond,
**caractérisé**
**en ce que** le fond de la chambre d'échauffement est conçu de manière à pouvoir être ouvert et à nouveau refermé.

8. Dispositif selon la revendication 7, comprenant par ailleurs :
(a) un moyen de détection d'un corps en matière plastique, le moyen de détection détectant si le corps en matière plastique se trouve sur le fond de la chambre d'échauffement ou non, pendant l'échauffement ;
(b) un moyen pour l'ouverture du fond lorsque le moyen de détection (a) a détecté un corps en matière plastique sur le fond ;
(c) un moyen pour la fermeture du fond après que le moyen (b) pour l'ouverture du fond ait ouvert le fond.

9. Dispositif selon la revendication 8, dans lequel le moyen de détection est sélectionné parmi : le fond de la chambre d'échauffement ; des ondes électromagnétiques comme la lumière ou des ondes radar ; des ondes ultrasonores.

10. Dispositif selon la revendication 8, dans lequel le moyen pour l'ouverture du fond est sélectionné parmi une charnière, un ressort, un moteur électrique.

11. Dispositif selon l'une des revendications 8 à 10, dans lequel le fond est réalisé sous forme de trappe, la trappe étant de préférence combinée à un contrepoids, qui est dimensionné et agencé sur la trappe de manière telle, que la trappe ferme la chambre d'échauffement aussi longtemps qu'aucune préforme se trouve sur la trappe, mais qui sous l'effet du poids de la préforme, libère ou ouvre la chambre d'échauffement, et dans lequel lorsque la préforme a quitté la chambre d'échauffement et également la trappe, la trappe est pressée par le contrepoids contre la chambre d'échauffement en fermant celle-ci.

12. Dispositif selon l'une des revendications 8 à 10, dans lequel le fond est réalisé sous forme de coulisseau.

13. Dispositif selon l'une des revendications 8 à 12, dans lequel le dispositif comprend un système de commande, qui est conçu de manière à signifier au moyen (b) l'ordre d'ouvrir le fond dès que le moyen (a) a détecté que le corps en matière plastique touche le fond ou repose sur celui-ci.

14. Dispositif selon l'une des revendications 8 à 13, dans lequel le dispositif comprend un système de commande, qui est conçu de manière à signifier au moyen (c) l'ordre de fermer le fond après que le moyen (b) ait ouvert le fond et que le corps en matière plastique ait quitté la chambre d'échauffement.

15. Appareil de fabrication d'un corps creux, de préférence d'un corps en matière plastique, de préférence en PET, le corps en matière plastique se présentant de préférence sous la forme d'une préforme à partir de laquelle est fabriqué le corps creux, de préférence une bouteille, l'appareil comprenant au moins :
(a) un dispositif tel que défini dans l'une des revendications 8 à 14 ;
(b) un dispositif d'étirage-soufflage.
